Europäisches Patentamt

European Patent Office

Office européen des brevets

(11) Veröffentlichungsnummer: **0 467 027 A2**

# EUROPÄISCHE PATENTANMELDUNG

(21) Anmeldenummer: **91107161.1**

(51) Int. Cl.5: **A01F 12/52**

(22) Anmeldetag: **03.05.91**

(30) Priorität: **18.05.90 DE 4015950**
     **14.01.91 DE 4100844**

(43) Veröffentlichungstag der Anmeldung:
     **22.01.92 Patentblatt 92/04**

(84) Benannte Vertragsstaaten:
     **BE DE DK FR GB IT**

(71) Anmelder: **DEERE & COMPANY**
     **1 John Deere Road**
     **Moline, Illinois 61265(US)**

(72) Erfinder: **Pieper, Dirk, Dipl.-Ing.**
     **Dr.-Wilhelm-Erb-Strasse 10**
     **W-6752 Winnweiler(DE)**
     Erfinder: **Giani, Angel**
     **67 Folpersviller**
     **F-57200 Sarreguemines(FR)**

(74) Vertreter: **Feldmann, Bernhard et al**
     **DEERE & COMPANY European Office Patent**
     **Department Steubenstrasse 36-42**
     **W-6800 Mannheim 1(DE)**

(54) **Förderer für eine Erntemaschine.**

(57)

2.1. Erntemaschinen weisen zur Rückführung von Erntegut in den Reinigungsprozeß (Überkehr) einen Förderer (46) auf, der das Fördergut an einer bestimmten Stelle durch eine Öffnung (60) oberhalb einer Drescheinheit abgibt. Nimmt die Erntemaschine eine seitliche Neigung an, sammelt sich auf der Siebvorrichtung Erntegut vermehrt auf der hangunten gelegenen Seite an, wo es z. T. ungereinigt aufgefangen und dem Förderer (46) zugeführt wird. Aufgrund dieser Neigung fällt das nunmehr zurückgeführte Erntegut erneut auf die hangunten liegende Seite, so daß sich ein Kreislauf mit immer größer werdender, zurückzuführender Menge an Erntegut einstellt.

2.2. Es wird vorgeschlagen, den Förderer (46) so zu ändern, daß die Abgabe des zurückgeführten Ernteguts in verschiedenen Richtungen erfolgen kann, so daß eine Umleitung von der hangunten liegenden zu der hangoben liegenden Seite erfolgen kann. Diese Lösung wird dadurch erreicht, daß der Öffnung (60) in dem Gehäuse (48) des Förderers (46) stromabwärts eine Leiteinrichtung (54) nachgeschaltet ist, um das Fördergut der jeweils hangoben liegenden Seite zuzuführen.

2.3. Ein derartiger Förderer (46) findet Anwendung bei Mähdreschern.

FIG. 2

Die Erfindung betrifft einen Förderer für eine Erntemaschine zur Abgabe von Fördergut in einen Raum mit einem Gehäuse und mit einem Förderelement, die sich zumindest teilweise innerhalb des Raums erstrecken, wobei das Gehäuse mindestens eine Öffnung zur Abgabe des Förderguts aufweist.

In herkömmlicher Weise finden sich Förderer an mobilen Erntemaschinen für vielfältigste Zwecke, z. B. zum Fördern von gereinigtem Erntegut in einem Korntank oder zum Zuführen von ausgedroschenem Erntegut zu einer Reinigungsvorrichtung. Eine besondere Art derartiger Förderer stellen sogenannte Überkehrförderer dar (sh. Prospekt: Laverda 3850-3890, 01/87, S. 8), die dem Reinigungsprozeß Erntegut entnehmen und es für eine weitere Abscheidung oder Reinigung dem Dresch- und Siebvorgang wieder aufgeben. Ein als Schnekke ausgebildetes Förderelement erstreckt sich innerhalb eines Gehäuses oberhalb einer Dreschtrommel quer durch einen Dreschraum und wirft das zurückgeführte Fördergut der Dreschtrommel zu. Fährt die Erntemaschine an einem Hang, fällt das durch die Öffnung in dem Gehäuse abgegebene Fördergut hangabwärts und führt zusammen mit dem sich ohnehin aufgrund der Neigung seitwärts verlagernden Erntegut zu einer einseitigen Anhäufung von zu reinigendem Gut auf den Sieben.

Die der Erfindung zugrunde liegende Aufgabe wird darin gesehen, einen Förderer der eingangs beschriebenen Art, dessen Gehäuse eine Öffnung zur Abgabe des Förderguts aufweist, so auszubilden, daß auch bei einer geneigten Erntemaschine das Fördergut nicht der hangabwärts gelegenen Seite aufgegeben wird.

Diese Aufgabe ist erfindungsgemäß durch die Merkmale der Patentansprüche 1 und 13 gelöst worden, wobei in den jeweils abhängigen Patentansprüchen Merkmale aufgeführt sind, die die Lösung in vorteilhafter Weise weiterentwickeln.

Gemäß der Lehre aus Patentanspruch 1 kann auf diese Weise das Fördergut an einer Stelle in dem Gehäuse abgegeben werden, die nicht zu einer Beaufschlagung der hangunten gelegenen Seite führt; wesentlich an dieser Lösung ist, daß die Abgabe nicht mehr für alle Arbeitsbedingungen an derselben Stelle erfolgt, sondern variabel ist, wobei es nachrangig ist, ob die Veränderung der Abgaberichtung bzw. der Abgabestelle manuell und von dem Willen einer Bedienungsperson abhängig ist oder automatisch erfolgt. Der Raum kann sowohl ein solcher sein, der eine Drescheinheit oder einer, der eine Reinigungsvorrichtung aufnimmt. Die Leiteinrichtung kann als schwenkbare Klappe oder Rutsche ausgebildet sein, die den aus der Öffnung austretenden Fördergutstrom zu der einen oder der anderen Seite hinlenkt.

Eine sehr einfache und mit geringem Aufwand zu realisierende Ausführung mit der Möglichkeit, das Fördergut auch weiter von der Öffnung weg in das Gehäuse abzugeben, wird durch die zusätzliche Verwendung einer Fördervorrichtung erzielt.

Eine Abgabe des Förderguts in verschiedenen Richtungen zu verschiedenen Stellen in dem Raum wird auf einfache Weise dadurch ermöglicht, daß die Fördervorrichtung in verschiedenen, entgegengesetzten Richtungen angetrieben werden kann.

Neben der vorteilhaften Möglichkeit, die Antriebsrichtung eines in der Fördervorrichtung enthaltenen Wurfrades umzukehren, kann auch dessen Abwurfrichtung geändert werden. Hierzu bietet es sich an, die Neigung der Drehachse des Wurfrades veränderlich zu gestalten oder ein Leitblech vorzusehen, das das abgeworfene Fördergut umlenkt.

Eine andere Möglichkeit, das Fördergut an verschiedene Abgabeorte zu transportieren, besteht in der Verwendung einer Schnecke in einem Schneckengehäuse, das an zwei Abgabestellen, insbesondere an seinen Stirnseiten, offen ist und somit je nach der Umdrehungsrichtung der Schnecke das Fördergut an einer der Abgabestellen austreten läßt.

Eine schnelle und auch aus der Entfernung durchführbare Steuerung der Leiteinrichtung und/oder der Fördervorrichtung ergibt sich durch den Einsatz eines Motors, z. B. eines elektrischen, pneumatischen oder hydraulischen, drehend wirkenden Motors. Vorzugsweise wird dieser Motor mittels eines Steuer- oder Regelkreises betrieben, so daß auch von einer Neigung der Erntemaschine herrührende Signale verwertet werden können, um das Fördergut an der hangoben gelegenen Seite aufzugeben. Anstatt der Neigung der Erntemaschine oder zusätzlich zu dieser kann auch die Belegung einer Siebvorrichtung der Erntemaschine geprüft werden, die auch aufgrund anderer Ursachen unterschiedlich sein kann, und zur Steuerung des Motors dienen.

Die Abgabestelle des Förderguts in dem Raum kann auch durch die Antriebsgeschwindigkeit der Fördervorrichtung verändert werden, da sich z. B. bei dem Wurfrad mit sich verändernder Drehzahl auch die Zentrifugalkraft ändert.

Besonders gute Verschleißeigenschaften hat ein Wurfrad, dessen Paddel aus Gummi oder Kunststoff hergestellt sind. Ein derartiges Material wirkt auch dämpfend auf das auftreffende Fördergut, so daß eine Beschädigung des Förderguts, z. B. Körnerbruch, vermieden wird.

Gemäß der Lehre nach Patentanspruch 13 kann auf diese Weise das Fördergut an einer Stelle in dem Gehäuse abgegeben werden, die nicht zu einer Beaufschlagung der hangunten gelegenen Seite führt; wesentlich an dieser Lösung ist, daß die Abgabe nicht mehr für alle Arbeitsbedingungen an derselben Stelle erfolgt, sondern variabel ist, wobei es nachrangig ist, ob die Veränderung der Lage der Öffnungen manuell und von dem Willen einer Bedienungsperson abhängig ist oder automatisch erfolgt. Insbesondere dann, wenn das Gut nur aufgrund der Schwerkraft aus dem Gehäuse tritt, erfolgt eine Gutabgabe immer nur dann, wenn die Öffnung das Gehäuse nach unten öffnet. Der Raum kann sowohl ein solcher sein, der eine Drescheinheit oder einer, der eine Reinigungsvorrichtung aufnimmt.

Eine sehr einfache und mit geringem Aufwand zu realisierende Ausführung stellt es dar, wenn das Gehäuse drehbar ausgebildet ist, sich die Öffnung(en) über einen Bereich des Umfangs in Drehrichtung erstreckt(en) und bei einem Förderer, der das Gut z. B. aufgrund der Zentrifugalkraft wirft, der(n) Öffnung(en) ein Prallelement gegenüberliegt. Eine derartige Maßnahme könnte mit dem Gehäuse des aus dem Stand der Technik bekannten Förderers durchgeführt werden, indem man es drehbar gestaltet, ansonsten aber unverändert läßt. Das Prallelement wird in diesem Fall von den Wänden des Dreschgehäuses gebildet.

Bei einer spiralförmigen Ausbildung der Öffnung oder Anordnung der Öffnungen wandert während der Drehung des Gehäuses ein nach unten offener Teil der Öffnung wie auf einer Schraubenlinie entlang der Drehachse und verlagert somit den Abgabeort.

In umgekehrter Weise kann die Öffnung mit dem Gehäuse ortsfest bleiben, der Auslaß aber mittels eines Verschluß-Elements in der Lage verändert werden.

Ebenso kann die Öffnung, bzw. können mehrere Öffnungen in einer Wandung, z. B. einem in Nuten geführten Blech, vorgesehen werden, das entlang der Förderrichtung verstellt, z. B. verschoben wird, und somit den Abgabeort bestimmt. Gleichermaßen kann diese Wandung dazu dienen, Öffnungen innerhalb des Gehäuses zu schließen und andere zu öffnen und somit wie ein Schieber wirken.

Mehrere Öffnungen, von denen wahlweise einige verschließbar sind, können sowohl in Umfangsrichtung versetzt in dem Gehäuse angeordnet sein oder auch einzeln verschlossen oder geöffnet werden. Handelt es sich bei dem Gehäuse um ein zylindrisches, drehbares Rohr, können z. B. drei Öffnungen vorgesehen werden, die in der Drehrichtung um ca. 90° zueinander versetzt sind.

Ein bewegliches Prallelement zum Verschließen der Öffnungen kann z. B. ebenfalls aus einem Rohr bestehen, das konzentrisch auf dem Gehäuse gelagert ist und selbst Öffnungen oder einen Schlitz aufweist. Erst wenn das Prallelement soweit gedreht oder bewegt ist, daß die Öffnungen in dem Gehäuse freigegeben werden, kann eine Abgabe an der gewünschten Stelle erfolgen.

Eine schnelle und auch aus der Entfernung durchführbare Steuerung der Öffnung ergibt sich durch den Einsatz eines Motors, z. B. eines elektrischen oder hydraulischen linear oder drehend wirkenden Motors. Vorzugsweise wird dieser Motor mittels eines Steuer- oder Regelkreises betrieben, so daß auch von einer Neigung der Erntemaschine herrührende Signale verwertet werden können und das Fördergut an der hangoben gelegenen Seite aufgegeben wird.

In der Zeichnung sind mehrere nachfolgend näher beschriebene Ausführungsbeispiele der Erfindung dargestellt.

Es zeigt:

Fig. 1 eine Erntemaschine mit einem erfindungsgemäßen Förderer in schematischer Darstellung und in Seitenansicht,

Fig. 2 einen Ausschnitt der Erntemaschine im Bereich des Förderers in Voransicht nach einem ersten Ausführungsbeispiel,

Fig. 3 den Förderer nach Fig. 2 in Seitenansicht,

Fig. 4 ein zweites Ausführungsbeispiel eines erfindungsgemäßen Förderers in Vorderansicht,

Fig. 5 einen Ausschnitt der Erntemaschine im Bereich des Förderers in Vorderansicht nach einem dritten Ausführungsbeispiel und

Fig. 6 eine Ansicht eines entlang der Linien A-A geführten Schnitts durch den Förderer nach Fig. 5 in Blickrichtung der dazugehörigen Pfeile.

Eine Erntemaschine 10 in der Art eines Mähdreschers stützt sich über vordere und rückwärtige Räder 12, 14 auf dem Boden ab und folgt somit den Bodenkonturen bzw. dessen Neigung. Die Bedienung der Erntemaschine 10 erfolgt durch einen Fahrer von einer Fahrerkabine 16 aus und erstreckt sich im wesentlichen auf eine optimale Erntegutaufnahme unter Beachtung der möglichen Geschwindigkeit und der hinnehmbaren Verluste. Hinter der Fahrerkabine 16 befindet sich ein Sammelbehälter 18 für das abgeschiedene Gut, d. h. bei einem Mähdrescher Getreide oder sonstiger Samen, wobei das Gut über ein Auslaufrohr 20 einem Anhänger aufgegeben werden kann.

Die Erntemaschine 10 enthält zudem ein Gehäuse 22, innerhalb dessen eine Drescheinheit 25, bestehend aus einer Dreschtrommel 24 und einem Dreschkorb 26, eine Wendetrommel 28, mehrere Strohschüttler 30, ein Vorbereitungsboden 32, eine Siebvorrichtung 34 und ein Gebläse 36 untergebracht sind. Das von einer nicht gezeigten Aufnahmevorrichtung, z. B. einem Schneidwerk oder einem Pflückvorsatz, aufgenommene Gut wird dem Gehäuse 22 über einen Schrägförderer 38 zugeführt und dort mittels der vorgenannten Komponenten bearbeitet. Zudem erstrecken sich unterhalb der Siebvorrichtung 34 eine Körnerschnecke 40, die abgeschiedenes Erntegut über einen nicht gezeigten Elevator dem Sammelbehälter 18 zuführt und eine Rückführschnecke 42, die in einen Elevator 44 mündet und mit dessen Hilfe weiter zu behandelndes Erntegut, das das Fördergut darstellt, einem erfindungsgemäßen Förderer 46 aufgibt.

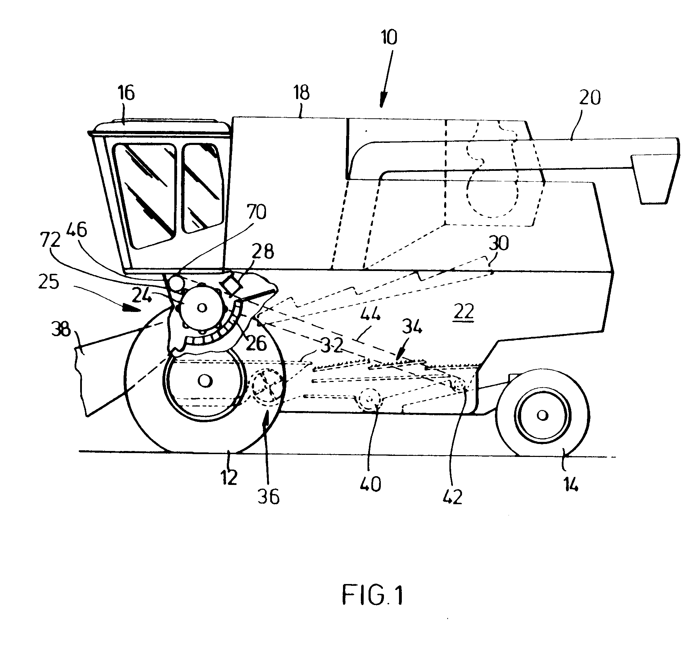

Die Drescheinheit 25 erstreckt sich über die gesamte Breite des Gehäuses 22 und wird normalerweise, d. h. bei der Fahrt auf im wesentlichen waagrechtem Boden, auch über die gesamte Breite gleichmäßig mit auszudreschendem Gut beschickt. In bekannter Weise ist der Dreschkorb 26 mit Öffnungen versehen, so daß das ausgedroschene Gut durch diese auf den Vorbereitungsboden 32 in dessen vorderen Bereich aufgegeben werden kann. Gut, das mittels der Strohschüttler 30 abgeschieden wird, wird ebenfalls von den in Figur 1 links gelegenen Enden der Strohschüttler 30 aus auf den vorderen, zumindest aber auf den mittleren Bereich des Vorbereitungsbodens 32 geworfen. Der Vorbereitungsboden 32 fördert das ausgedroschene Gut, das noch mit Verunreinigungen, Stroh, Ährenteilen usw. vermengt ist, in Figur 1 von links nach rechts, d. h. von der Drescheinheit 25 zu der Siebvorrichtung 34, die das brauchbare von dem unbrauchbaren Gut trennt. Zur Trennung wird mittels des Gebläses 36 ein Luftstrom erzeugt, der durch die Siebvorrichtung 34 geblasen wird und die in der Regel leichteren, unbrauchbaren Bestandteile des Gutgemischs am rückwärtigen und in Figur 1 rechts gelegenen Ende der Erntemaschine 10 auswirft.

Die Trennkapazität und -funktion der Siebvorrichtung 34 ist jedoch stark abhängig von der Gleichmäßigkeit der Belegung der Siebvorrichtung 34. Während bei der Arbeit auf im wesentlichen horizontalem Gelände die Siebvorrichtung 34 gleichmäßig mit zu reinigendem Gut belegt ist, tritt bei der Hangarbeit, d. h. bei geneigtem Gelände, eine Verlagerung des zu reinigenden Guts zur Talseite hin ein. Diese ungleichmäßige Belegung bei Hangfahrt hat zur Folge, daß der von dem Gebläse 36 erzeugte Luftstrom den Weg des geringsten Widerstandes geht und dort durch die Siebvorrichtung 34 strömt, wo sich kein Gut befindet. Daraus folgt, daß der Gutstrom ungereinigt über die Siebvorrichtung 34 befördert wird und, da er ein zu großes Volumen hat, auch nicht von der Siebvorrichtung 34 zu dem Sammelbehälter 18 weitergeleitet werden kann. Vielmehr wird ein Teil des Gutstromes der Siebvorrichtung 34 am Ende des Gehäuses 22 der Rückführschnecke 42 zugeleitet, die es dem Reinigungsprozeß vorzugsweise an der Drescheinheit 25 wieder zuführt; es ist aber auch möglich, diesen Gutstrom oberhalb des Vorbereitungsbodens 32 oder oberhalb der Siebvorrichtung 34 wieder einzuleiten, wobei es gegebenenfalls zuerst in einer separaten Nachdrescheinrichtung behandelt wird.

Mit jedem der erfindungsgemäßen Förderer 46, 146 wird - wie im folgenden beschrieben - erreicht, daß das am Ende der Siebvorrichtung 34 aufgefangene abgeschiedene Gut nicht erneut der hangunten liegenden Seite der Drescheinheit 25 und/oder des Vorbereitungsbodens 32 und/oder der Siebvorrichtung 34 zugeführt wird, denn dann müßte es zusammen mit einer ohnehin anfallenden und zurückzuführenden Gutmenge erneut aufgefangen und zurückgeführt werden.

Der erfindungsgemäße Förderer 46 enthält insbesondere ein Gehäuse 48, ein Förderelement 50 und eine Leiteinrichtung 54.

Das Gehäuse 48 ist in diesem Ausführungsbeispiel als zylindrisches Rohr ausgebildet und durchdringt eine rechte Seitenwand 52 der Erntemaschine 10 - es erstreckt sich somit in dem bevorzugten Ausführungsbeispiel oberhalb der Dreschtrommel 24 quer durch einen Raum 58, in dem sich die Drescheinheit 25 befindet. Die Hinweise "links" und "rechts" beziehen sich auf die Vorwärtsfahrtrichtung der Erntemaschine 10.

Das Förderelement 50 ist als eine Schnecke ausgebildet, die das Fördergut von dem Elevator 44 annimmt und es zu einer Öffnung 60 in dem Gehäuse 48 im Bereich der Leiteinrichtung 54 führt. Der Antrieb des Förderelements 50 erfolgt über eine in dem Elevator 44 geführte, nicht näher dargestellte Elevatorkette.

An seinem Abgabeende 62 enthält das Förderelement 50 eine Abwurfschaufel 64, die das Fördergut der Leiteinrichtung 54 zuführt.

Die Leiteinrichtung 54 kann - wie dies allerdings nicht gezeigt ist - als eine einfache, schwenkbare Klappe oder Rutsche ausgebildet sein, die den aus der Öffnung 60 austretenden Fördergutstrom zu der einen oder der anderen Seite, d. h. zu der linken oder der rechten Seitenwand 56, 52 hinlenkt. Eine derartige Klappe oder Rutsche könnte mittels eines fernsteuerbaren Motors verstellt werden. Als Bewegungsenergie wirkt dann nur die Erdanziehung.

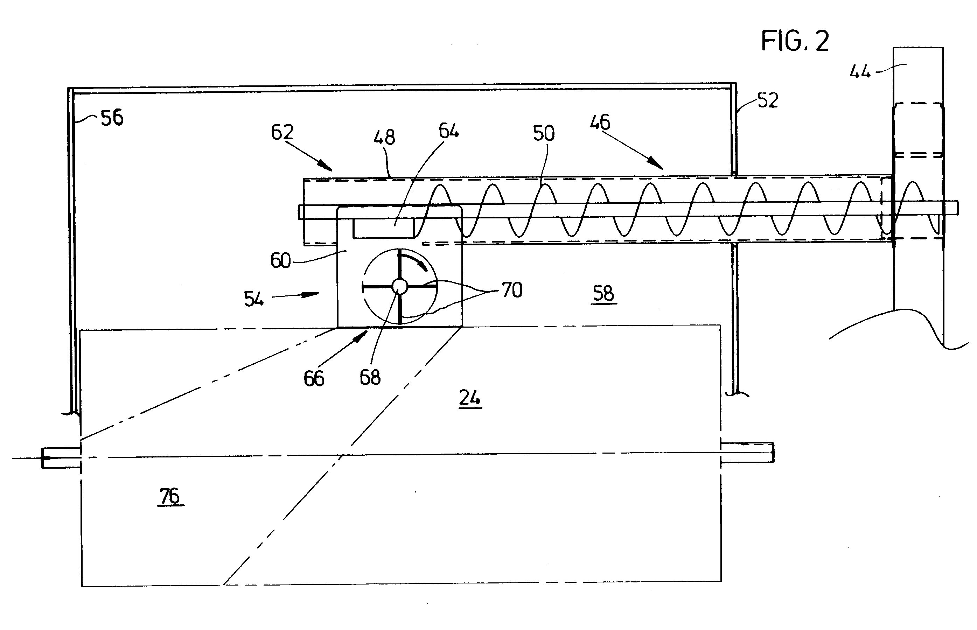

Die Leiteinrichtung 54 kann aber auch gemäß den Figuren 2 bis 4 zusätzlich eine Fördervorrichtung 66 enthalten, die dem Fördergut zusätzliche Bewegungsenergie aufgibt.

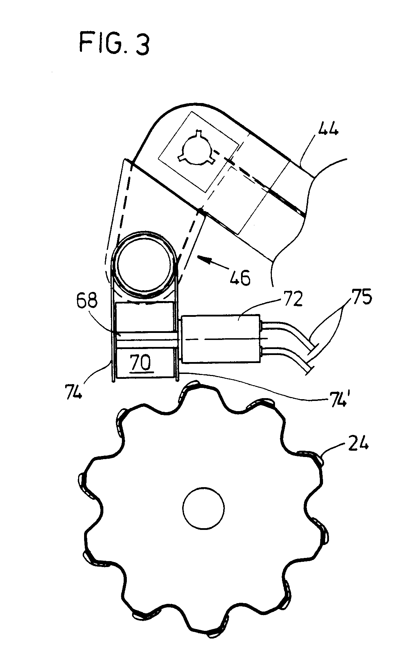

Gemäß den Figuren 2 und 3 enthält die Fördervorrichtung 66 ein Wurfrad mit einem Rotor 68 und Paddeln 70.

Die Fördervorrichtung 66 bzw. das Wurfrad befindet sich in unmittelbarer Nachbarschaft zu der Öffnung 60 und kann somit das Fördergut direkt annehmen.

Der Rotor 68 ist drehfest an einen Motor 72, vorzugsweise einen Elektromotor, angeflanscht und wird von diesem in Drehung versetzt, wobei die Antriebsgeschwindigkeit veränderlich und die Antriebsrichtung umkehrbar ist. Der Rotor 68 ist in zwei Wänden 74, 74' drehbar gelagert, die nahezu radial zu der Drehachse der Dreschtrommel 24 verlaufen und somit eine Abwurföffnung zu der Dreschtrommel 24 hin bieten.

Die Paddel 70 sind an den Rotor 68 angegossen, angeklebt, angeschraubt oder auf sonstige Weise befestigt; sie sind aus Gummi oder Kunststoff hergestellt, um einen harten Aufprall des Förderguts zu dämpfen. Bei diesem Ausführungsbeispiel sind vier um jeweils 90° zueinander versetzte Paddel 70 vorgesehen.

Der Motor 72 wird über Leitungen 75 mit Energie versorgt, die von einer weiter unten beschriebenen Steuer- oder Regelvorrichtung bestimmt wird.

Geht man von einer Drehrichtung des Rotors 68 aus, wie sie mit dem Pfeil angegeben ist, wird das von dem Förderelement 50 ankommende Fördergut im wesentlichen gemäß der angedeuteten Wurfbahn 76 abgeworfen. Dreht der Rotor 68 in der anderen Richtung, reicht die Wurfbahn 76 bis zur rechten Seitenwand 52.

Das Ausführungsbeispiel nach Figur 2 könnte auch in hervorragender Weise dergestalt geändert werden, daß die Leiteinrichtung 54 nicht seitlich der Öffnung 60 angebracht wird, sondern als Propeller ausgebildet ist, der sich koaxial zu dem Förderelement 50 erstreckt, vorzugsweise aber diesem gegenüber relativ beweglich ist. Diese relative Beweglichkeit wird dadurch erreicht, daß die Welle des als Schnecke ausgebildeten Förderelements 50 als Hohlwelle ausgebildet wird, durch deren Hohlraum sich eine Welle erstreckt, an deren einem Ende, nämlich dem axial offenen Ende des Gehäuses 48 sich der Propeller befindet, und an deren anderem Ende, das nach außen über den Elevator 44 hinausragt, ein Motor angeschlossen ist. Mit dem propellerseitigen Ende ragt die Welle des Propellers über das Gehäuse 48 hinaus, und der Propeller selbst weist einen Durchmesser auf, der wesentlich größer ist als der Durchmesser des Gehäuses 48. Durch eine Veränderung der Drehzahl und der Drehrichtung der Welle mit dem Propeller und gegebenenfalls der Neigung der Propellerflügel kann das axial aus dem Gehäuse 48 austretende Gut mehr oder weniger weit von der Abgabestelle weggeschleudert werden. Selbstverständlich ist bei dieser Anordnung die Öffnung 60 geschlossen.

Die Regelung des Motors, der dem Motor 72 entsprechen kann, erfolgt wie weiter unten für den Motor 72 beschrieben, d. h. in Abhängigkeit von einer festgestellten Neigung und/oder ungleichen Materialverteilung über dem Vorbereitungsboden 32 bzw. der Siebvorrichtung 34.

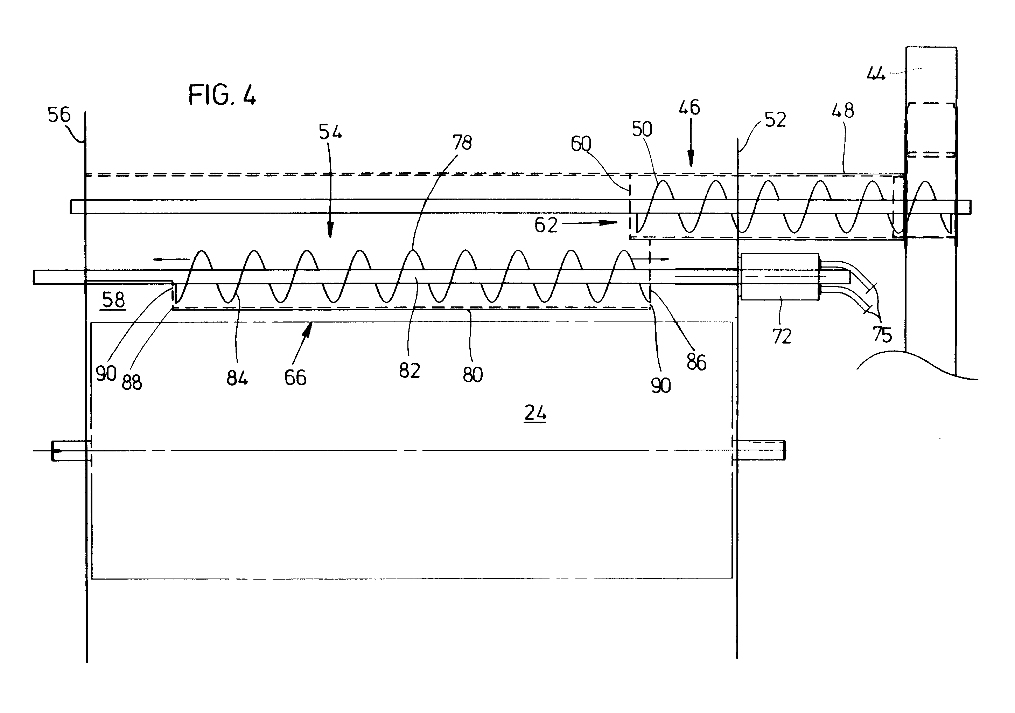

Bei dem Ausführungsbeispiel nach Figur 4 enthält die Leiteinrichtung 54 eine Fördervorrichtung 66 mit einer Schnekke 78, die in einem Schneckengehäuse 80 aufgenommen ist.

Die Schnecke 78 durchdringt mit einer Schneckenwelle 82 mit ihrem linken Endbereich die linke Seitenwand 56 und mit ihrem rechten Endbereich die rechte Seitenwand 52, in denen sie jeweils drehbar gelagert ist. In dem rechten Endbereich ist auf die Schneckenwelle 82 der Motor 72 drehfest aufgesetzt und an Leitungen 75 angeschlossen. Der Motor 72 selbst ist an die rechte Seitenwand 52 drehfest angeschraubt.

Die Schnecke 78 weist Schneckenwendel 84 auf, die auf die Schneckenwelle 82 aufgeschweißt sind und ca. 3/4 des Abstands zwischen den Seitenwänden 52, 56 überspannen.

Das Schneckengehäuse 80 erstreckt sich im wesentlichen über die Länge der Schneckenwendel 84 und läßt an beiden Stirnseiten 86, 88 Öffnungen 90 zur Abgabe des Förderguts in den Raum 58. Die Schneckenwendel 84 überlappen das Förderelement 50 in der Förderrichtung geringfügig, und die Schnecke 78 ist mit ihrem Schneckengehäuse 80 unterhalb des Gehäuses 48 angeordnet. Auf diese Weise fällt von dem Förderelement 50 herangebrachtes Fördergut aus der Öffnung 60 in das Schneckengehäuse 80, in dem es von der Schnecke 78 zu deren linken oder rechten Stirnseite 88 oder 86 und der dortigen Öffnung 90 zur Abgabe in den Raum 58 bewegt wird.

Die Regelung des Antriebs des Motors 72 erfolgt auf sinnvollste Weise automatisch, und zwar abhängig von der seitlichen Neigung der Erntemaschine 10. Diese Neigung kann mittels eines nicht gezeigten Signalgebers, z. B. eines Pendels oder einer Quecksilberwaage erfaßt, in ein Signal umgewandelt und einem Steuer- oder Regelkreis zugeführt werden. Dieser Steuer- oder Regelkreis bildet ein Ausgangssignal zur Ansteuerung des Motors 72 dergestalt, daß die Fördervorrichtung 66 stets so angetrieben wird, daß die Abgabe des Förderguts an der hangoben liegenden Seite erfolgt. Auf diese Weise findet eine Umverteilung des in der Erntemaschine 10 zu behandelnden Guts zu der hangoben liegenden Seite statt und die eingangs beschriebene Reinigung des Gemenges auf der Siebvorrichtung 34 erfolgt gleichmäßig auf deren gesamten Fläche.

Zur Unterstützung oder Erhöhung dieser Wirkung kann der Motor 72 mit unterschiedlicher Drehzahl angetrieben werden, um die Abwurfenergie zu erhöhen, oder in entgegengesetzten Richtungen, um die Abgabestelle entsprechend zu wählen.

Während die Erntemaschine 10 einen Erntevorgang ausführt, wird Getreide, das am Ende der Siebvorrichtung 34 von der Rückführschnecke 42 aufgefangen wurde, über den Elevator 44 zu dem Förderer 46 gebracht, in dem es von dem Förderelement 50 aufgenommen und innerhalb des Gehäuses 48 zu der Öffnung 60 geführt wird, wo es zur Leiteinrichtung 54 und gegebenenfalls der Fördervorrichtung 66 gelangt. Je nach der seitlichen Neigung der Erntemaschine 10 wird über den nicht gezeigten Steuer- oder Regelkreis der Motor 72 in der einen oder der anderen Richtung angetrieben, so daß das Fördergut in Richtung zu der linken oder der rechten Seitenwand 56, 52 geworfen wird.

Es ist somit zu erkennen, daß durch eine Änderung der Lage der Klappe oder der Rutsche bzw. der Drehrichtung des Motors 72 und infolgedessen des Rotors 68 bzw. der Schnecke 78 die Abgabestelle des Förderguts verändert werden kann und somit eine Abgabe an jeder Stelle zwischen den beiden Seitenwänden 52, 56 erfolgen kann.

Bewegt sich die Erntemaschine 10 auf einer waagrechten Ebene, steht bei dem ersten Ausführungsbeispiel der Rotor 68 still, oder er wird mit einer sehr geringen Geschwindigkeit angetrieben, so daß das Fördergut im senkrechten Fall auf die Dreschtrommel 24 auftrifft. Bei dem zweiten Ausführungsbeispiel wird die Schnecke 78 abwechselnd jeweils für eine kurze Zeit (z. B. 30 Sekunden) in der einen Richtung und dann in der anderen Richtung angetrieben.

Der erfindungsgemäße Förderer 146 nach einem dritten Ausführungsbeispiel setzt sich im wesentlichen aus einem Gehäuse 148 und einem Förderelement 150 zusammen.

Das Gehäuse 148 ist in diesem Ausführungsbeispiel als zylindrisches Rohr ausgebildet, durchdringt eine rechte Seitenwand 152 der Erntemaschine 10 und ist in einem Kragen 154 an der linken Seitenwand 56 drehbeweglich gelagert - es erstreckt sich somit in dem bevorzugten Ausführungsbeispiel oberhalb der Dreschtrommel 24 quer durch den Raum 58, in dem sich die Drescheinheit 25 befindet. Der dem Kragen 54 gegenüberliegende Endbereich des Gehäuses 148 ist in einem Kragen 160 in einem Schacht 162 des Elevators 44 ebenfalls drehbar gelagert. Die Durchtrittsstelle in der rechten Seitenwand 52 ist auf nicht gezeigte Weise abgedichtet. Die Hinweise "links" und "rechts" beziehen sich auf die Vorwärtsfahrtrichtung der Erntemaschine 10.

An dem Gehäuse 148 sind ein Stellarm 164 und eine Öffnung 166 vorgesehen.

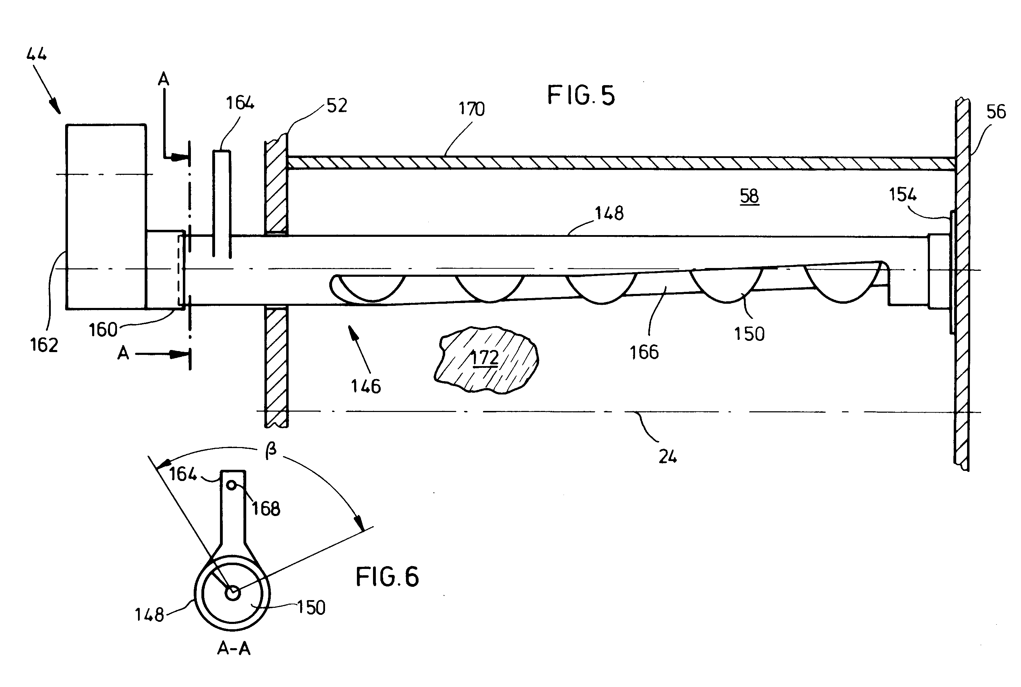

Der Stellarm 164 greift radial an der Außenwand des Gehäuses 148 an, wie dies aus Figur 3 ersichtlich ist, und hat eine Länge, die etwas größer ist als der Durchmesser des Gehäuses 148. An dem freien Endbereich ist in den Stellarm 164 eine Bohrung 168 eingebracht, in die ein Stellteil eines nicht gezeigten Motors eingreifen kann, um das Gehäuse 148 zu verschwenken. Das maximale Schwenkmaß ist in Figur 6 mit -$\beta$- angegeben und beträgt im vorliegenden Fall etwas mehr als 90˚.

Die Öffnung 166 stellt sich als ein leicht spiralförmiger Schlitz dar, der nahezu über die gesamte Länge des zwischen den Seitenwänden 52, 56 gelegenen Abschnitts des Gehäuses 148 verläuft und ca. die Hälfte des Umfangs ausmacht. Blickt man in Richtung der Pfeile A-A auf das Gehäuse 148, dann beginnt die Öffnung 166 aufgrund ihrer spiralförmigen Anordnung bei einem Winkel von ca. 90˚ in dem mit Blick auf Figur 5 linken Endbereich und bei einem Winkel von ca. 45˚ in dem mit Blick auf Figur 5 rechten Endbereich - d. h., sie beginnt rechts weiter oben als links. Wird das Gehäuse 148 um seine Längsmittenachse gedreht, wandern die Anfangspunkte der Öffnung 166 weiter nach oben oder nach unten. Die Drehbewegung wird mittels des vorgenannten Motors, oder über ein ebenfalls nicht gezeigtes Gestänge von Hand ausgeführt.

Das Förderelement 150 wird in diesem Ausführungsbeispiel von einer Schnecke gebildet, die in dem Schacht 162 Fördergut annimmt und es innerhalb des Gehäuses 148 bis zur Öffnung 166 transportiert. Der Antrieb des Förderelements 150 erfolgt auf bekannte Weise und wird deshalb nicht beschrieben.

Ein Prallelement 170 erstreckt sich oberhalb und ein weiteres Prallelement 172 mit Blickrichtung auf Figur 1 links, d. h. davor und entlang dem Gehäuse 148. Das Prallelement 170 bildet in diesem Ausführungsbeispiel zugleich den Boden der Fahrerkabine 16, und das Prallelement 172 stellt die vordere Wand des Raums 58 der Drescheinheit 25 dar; selbstverständlich könnten aber auch eigenständige Prallelemente vorgesehen werden. Die Zusammenschau der Figuren 1 und 5 macht deutlich, daß diese Prallelemente 170, 172 - je nach der Stellung des Gehäuses 148 - der Öffnung 166 mehr oder weniger gegenüberliegen und somit von Fördergut beaufschlagt werden, das von dem Förderelement 150 durch die Öffnung 166 abgeworfen wird.

Es wird darauf hingewiesen, daß nicht in jedem Fall ein Prallelement 170, 172 erforderlich ist, sondern nur dann, wenn das Förderelement 150 das Fördergut in jeder Stellung des Gehäuses 148 durch die Öffnung 166, z. B. infolge der Zentrifugalkraft, hinausschleudert. Bewegt sich das Förderelement 150 hingegen so langsam, daß das Fördergut nur zur Öffnung 166 transportiert wird und dort nur aufgrund der Schwerkraft herausfällt, ist kein Prallelement 170, 172 erforderlich; in diesem Fall reicht es zur Erzielung der mit der Erfindung erzielten Wirkung aus, wenn die Öffnung 166 in eine Lage gebracht wird, in der sie das Gehäuse 148 nach unten öffnet.

Während die Erntemaschine 10 einen Erntevorgang ausführt, wird Getreide, das am Ende der Siebvorrichtung 34 von der Rückführschnecke 42 aufgefangen wurde, über den Elevator 44 zu dem Förderer 146 gebracht, in dem es von dem Förderelement 150 aufgenommen und innerhalb des Gehäuses 148 zu der Öffnung 166 geführt wird. Je nach der Stellung des Gehäuses 148 und somit der Lage der in ihm vorhandenen Öffnung 166 besteht ein größerer oder ein kleinerer Abstand zu dem jeweils nächsten Prallelement 170 bzw. 172. Ist der besagte Abstand sehr gering, entspricht dies in der Praxis einem Verschluß der Öffnung 166 in dem jeweiligen Bereich, so daß das Fördergut bis zu einem Bereich weitergefördert werden muß, in dem der Abstand ausreichend groß ist und das Fördergut abgegeben werden kann. In dem gezeigten Ausführungsbeispiel wäre eine ungehinderte Abgabe in dem mit Blick auf Figur 2 mittleren Bereich der Öffnung 166 möglich, weil dort keines der Prallelemente 170, 172 der Öffnung direkt gegenüberliegt. Dreht man das Gehäuse 148 in Blickrichtung der Pfeile A-A im Uhrzeigerdrehsinn, dann wandert der Abgabebereich zur rechten Seitenwand 52, dreht man es entgegen dem Uhrzeigerdrehsinn, dann wandert er zur linken Seitenwand 56.

Es ist somit zu erkennen, daß durch eine Drehung des Gehäuses 148 und somit durch ein Hinbewegen eines jeweils fortwandernden Bereichs der Öffnung 166 zu einem oder beiden Prallelementen 170, 172 die Abgabestelle des Förderguts verändert werden kann und somit eine Abgabe an jeder Stelle zwischen den beiden Seitenwänden 52, 56 erfolgen kann.

Ist kein Prallelement 170, 172 erforderlich, rieselt das Fördergut an der Stelle aus dem Gehäuse 148, an der sich die Öffnung 166 unten befindet.

Die Drehung des Gehäuses 148 erfolgt auf sinnvollste Weise automatisch, und zwar abhängig von der seitlichen Neigung der Erntemaschine 10. Diese Neigung kann mittels eines nicht gezeigten Signalgebers, z. B. eines Pendels oder einer Quecksilberwaage erfaßt, in ein Signal umgewandelt und einem Steuer- oder Regelkreis zugeführt werden. Dieser Steuer- oder Regelkreis bildet ein Ausgangssignal zur Ansteuerung des Motors dergestalt, daß das Gehäuse 48 stets so gedreht wird, daß die Abgabe des Förderguts an der hangoben liegenden Seite erfolgt. Auf diese Weise findet eine Umverteilung des in der Erntemaschine 10 zu behandelnden Guts zu der hangoben liegenden Seite statt und die eingangs beschriebene Reinigung des Gemenges auf der Siebvorrichtung 34 erfolgt gleichmäßig auf deren gesamten Fläche.

**Patentansprüche**

1. Förderer (46) für eine Erntemaschine (10) zur Abgabe von Fördergut in einen Raum (58) mit einem Gehäuse (48) und mit einem Förderelement (50), die sich zumindest teilweise innerhalb des Raums (58) erstrecken, wobei das Gehäuse (48) mindestens eine Öffnung (60) zur Abgabe des Förderguts aufweist, dadurch gekennzeichnet, daß der Öffnung (60) eine Leiteinrichtung (54) zur Abgabe des Förderguts in den Raum (58) in verschiedenen Richtungen nachgeschaltet ist.

2. Förderer nach Anspruch 1, dadurch gekennzeichnet, daß die Leiteinrichtung (54) eine antreibbare Fördervorrichtung (66) enthält.

3. Förderer nach Anspruch 2, dadurch gekennzeichnet, daß die Fördervorrichtung (66) in zwei Richtungen antreibbar ist.

4. Förderer nach Anspruch 2 oder 3, dadurch gekennzeichnet, daß die Fördervorrichtung (66) ein angetriebenes Wurfrad (68, 70) enthält.

5. Förderer nach Anspruch 3, dadurch gekennzeichnet, daß die Fördervorrichtung (66) eine Schnecke (78) in einem an seinen Stirnseiten (86, 88) offenen Schneckengehäuse (80) enthält.

6. Förderer nach einem oder mehreren der vorherigen Ansprüche, dadurch gekennzeichnet, daß der Antrieb der Fördervorrichtung (66) mittels eines direkt angeschlossenen, als Hydraulik-, Pneumatik- oder Elektromotor ausgebildeten Motors (72) erfolgt.

7. Förderer nach einem oder mehreren der vorherigen Ansprüche, dadurch gekennzeichnet, daß die Antriebsgeschwindigkeit der Fördervorrichtung (66) veränderbar ist.

8. Förderer nach einem oder mehreren der vorherigen Ansprüche, dadurch gekennzeichnet, daß die Antriebsgeschwindigkeit und die Antriebsrichtung in Abhängigkeit von der Größe des Neigungswinkels der Erntemaschine (10) zur Horizontalen mittels einer Steuer- oder Regelvorrichtung veränderbar ist.

9. Förderer nach einem oder mehreren der vorherigen Ansprüche, dadurch gekennzeichnet, daß die Antriebsgeschwindigkeit und die Antriebsrichtung in Abhängigkeit von der Größe einer Ungleichmäßigkeit in der Belegung einer Siebvorrichtung (34) in der Erntemaschine (10) mit Fördergut mittels einer Steuer- oder Regelvorrichtung veränderbar ist.

10. Förderer nach Anspruch 8 oder 9, dadurch gekennzeichnet, daß die Regel- oder Steuereinrichtung einen Signalgeber und einen Signalempfänger enthält.

11. Förderer nach einem oder mehreren der vorherigen Ansprüche, dadurch gekennzeichnet, daß das Wurfrad (68, 70) mit Paddeln (70) aus Kunststoff, Gummi, oder dergl. bestückt ist.

12. Förderer nach einem oder mehreren der vorherigen Ansprüche, dadurch gekennzeichnet, daß die Abwurfrichtung des Wurfrads (68, 70) veränderbar ist.

13. Förderer (146) für eine Erntemaschine (10) zur Abgabe von Fördergut in einen Raum (58) mit einem Gehäuse (148) und mit einem Förderelement (150), die sich teilweise innerhalb des Raums (58) erstrecken, wobei das Gehäuse (148) mindestens eine Öffnung (166) zur Abgabe des Förderguts aufweist, dadurch gekennzeichnet, daß die Lage der Öffnung(en) (166) veränderbar ist.

14. Förderer nach Anspruch 13, dadurch gekennzeichnet, daß das Gehäuse (148) drehbar ausgebildet ist, sich die Öffnung(en) (166) über einen Bereich des Umfangs in Drehrichtung erstreckt(en) und der(n) Öffnung(en) (166) ein Prallelement (170, 172) gegenüberliegt.

15. Förderer nach Anspruch 13 oder 14, dadurch gekennzeichnet, daß das Gehäuse (148) als zylindrisches Rohr ausgebildet ist und die Öffnung(en) (166) spiralförmig auf dem Umfang des Gehäuses (148) verläuft, bzw. spiralförmig darauf angeordnet sind.

16. Förderer nach Anspruch 13, dadurch gekennzeichnet, daß das Gehäuse (148) starr ausgebildet ist und ein beweglicher, die Öffnung(en) (166) teilweise verschließender Riegel vorgesehen ist.

17. Förderer nach Anspruch 13, dadurch gekennzeichnet, daß die Öffnung(en) (166) in einer beweglichen Wandung vorgesehen ist (sind), die einen Auslaß überdeckt, der größer ist als die Öffnung(en) (166) und im Bereich des Auslasses bewegbar ist.

18. Förderer nach einem oder mehreren der vorherigen Ansprüche, dadurch gekennzeichnet, daß bei mehreren Öffnungen (166) einige davon wahlweise verschließbar sind.

19. Förderer nach Anspruch 18, dadurch gekennzeichnet, daß das Gehäuse (148) drehbeweglich ist und für jede Öffnung (166) ein Prallelement (170, 172) vorgesehen ist, wobei je nach der Stellung des Gehäuses (148) jeweils eine oder mehrere der Öffnungen (166) verschlossen sind.

20. Förderer nach Anspruch 18, dadurch gekennzeichnet, daß das Gehäuse (148) starr ist und für jede Öffnung (166) ein drehbewegliches Prallelement (170, 172) vorgesehen ist, wobei je nach der Stellung des Prallelements (170, 172) jeweils eine oder mehrere der Öffnungen (166) verschlossen sind.

21. Förderer nach einem oder mehreren der vorherigen Ansprüche, dadurch gekennzeichnet, daß an dem drehbeweglichen Gehäuse (148) oder Prallelement (170, 172) ein Stellarm (164) zur Verbindung mit einem Motor vorgesehen ist.

22. Förderer nach Anspruch 21, dadurch gekennzeichnet, daß der Motor mittels einer Regel- oder Steuereinrichtung betrieben wird.

23. Förderer nach Anspruch 22, dadurch gekennzeichnet, daß die Regel- oder Steuereinrichtung einen Signalgeber und einen Signalempfänger enthält, wobei der Signalgeber auf die Neigung der Erntemaschine (10) in der Förderrichtung des Förderers (146) anspricht.

24. Förderer nach einem oder mehreren der vorherigen Ansprüche 1 bis 12, dadurch gekennzeichnet, daß sich koaxial zu dem Förderelement (50) eine Welle mit einem antreibbaren Propeller erstreckt, der das abgabeseitig axial aus dem Gehäuse (48) austretende Fördergut erfaßt.

25. Erntemaschine, insbesondere Mähdrescher, mit einem nach einem der Patentansprüche 1 bis 24 ausgebildeten Förderer zur Zuführung von zu dreschendem Erntegut in ein Dreschgehäuse.

FIG.1

FIG. 2

EP 0 467 027 A2

FIG. 3

FIG. 4

FIG.5

FIG.6

A-A

EP 0 467 027 A2